Europäisches Patentamt

European Patent Office

Office européen des brevets

(19)

(11)  **EP 1 127 482 B1**

(12)  **EUROPEAN PATENT SPECIFICATION**

(45) Date of publication and mention
of the grant of the patent:
**24.03.2004  Bulletin 2004/13**

(51) Int Cl.7: **A01G 9/18**, A01G 31/02

(21) Application number: **01100622.8**

(22) Date of filing: **11.01.2001**

(54) **Apparatus for culturing plantlets and process for culturing plantlets by using said apparatus**

Setzlingszuchteinrichtung und diese Einrichtung anwendendes Setzlingszuchtverfahren

Appareil pour cultiver des plantules et procédé de culture de plantules utilisant cet appareil

(84) Designated Contracting States:
**DE FR GB NL**

(30) Priority:  **21.01.2000  JP  2000012721**

(43) Date of publication of application:
**29.08.2001  Bulletin 2001/35**

(73) Proprietor: **Nisshinbo Industries, Inc.**
**Tokyo (JP)**

(72) Inventors:
  • **Zobayed, S.M.A., c/o Department of Horticulture**
  **Matsudo-shi, Chiba-ken (JP)**
  • **Hasegawa, Osamu, Nisshinbo Industries, Inc.**
  **Chuo-ku, Tokyo (JP)**

  • **Kozai, Toyoki**
  **Matsudo-shi, Chiba-ken (JP)**
  • **Afreen-Zobayed, Fawzia,**
  **c/o Dept. of Horticulture**
  **Matsudo-shi, Chiba-ken (JP)**

(74) Representative: **Leifert, Elmar, Dr. et al**
**Leifert & Steffan,**
**Burgplatz 21/22**
**40213 Düsseldorf (DE)**

(56) References cited:
**EP-A- 0 978 232       GB-A- 2 234 415**
**NL-A- 9 100 716       US-A- 3 492 761**

**Description**

BACKGROUND OF THE INVENTION

1. Field of the Invention

The present invention relates to an apparatus for culturing plantlets and a process for culturing plantlets by using the aforesaid apparatus. More particularly, it is concerned with a practical apparatus for culturing plantlets by means of photoautotrophic growth, in which the apparatus can afford uniform distribution of the carbon dioxide concentration in the vicinity of the plantlets in the enclosed culture vessel, easy control of the feed amount of a culture solution, and steady mass production of uniform nursery plants having an excellent degree of growth; and also with a process for culturing plantlets by means of photoautotrophic growth, in which the process can afford efficient and steady mass producion of uniform nursery plants having an excellent degree of growth through a simple operation by the use of this apparatus.

2. Description of the Related Arts

Ever since the commencement of plant cultivation, the hypogeal conditions in producing plants have heretofore been dependent upon the soil. However, it is extremely difficult to control the hypogeal environment through the soil because of the intricacies of the soil in terms of physical, chemical and biological properties. In recent years, therefore, researches have been made on cultivation with a nutrient solution without the use of the soil.
In order to achieve steady mass production of plants by cultivation with a nutrient solution, importance is attached to an environment controlling system capable of artificially conferring environmental conditions well suited to the growth of the plants. The production technology for plants by the environment controlling system is the technology of manifesting to the utmost, the growth capacity given to the plants by artificially conferring optimum environment for the growth of the plants. For the purpose of realizing the technology as mentioned above, the factors relating to the growth of plants must be comprehensively controlled, including light, ambient temperature, carbon dioxide concentration, oxygen concentration, ambient humidity and culture solution.
Methods for controlling the environment for the growth of a plant have hitherto been found in a variety of types, in which the constitution can be classified according to methods for controlling epigeal and hypogeal portions of the plant, into the types of gas uniphase, gas-liquid biphase, gas-liquid- solid terphase and liquid uniphase. Among them, the gas-liquid biphase and gas-liquid-solid terphase, which are both in gas phase in epigeal portions, are divided by the difference in the environment of hypogeal portions. In the former, plantlets float to the liquid surface, while being supported with a polystyrene foam plate or the like, and the root portion lies in a liquid. In the latter, in place of the soil, the form of solid such as sand, gravel, smoked coal, fiber including rock wool, porous bodies or the like is adopted as a support for plantlets. A so-called plant factory already commercialized at the present time mainly belongs to any of the former and latter types in which cultivation with a nutrient solution is adopted in the hypogeal conditions.
As a process for culturing plantlets by the environment controlling system, there has heretofore been employed a photomixotrophic growth process, which uses as a carbon source, a culture solution incorporated with sugar or the like, since it has been believed that sugar or the like must have been added to the culture solution as a carbon source by reason of rapid decrease in the carbon dioxide concentration in the gas phase due to an enclosed culture of plantlets.
Nevertheless, the culturing process by photomixotrophic growth (hereinafter abbreviated to "photomixotrophic culture" in some cases), has been involved in the problems due to the addition of a sugar or the like to the culture solution as a carbon source, including that there is a fear of causing loss of a plantlet to be cultured due to deterioration by miscellaneous germs and bacteria simply called "contamination"; the growth of a plantlet during the culture period is retarded by dependency on sugared culture, which brings about photomixotrophic state; the growth of the plantlet is retarded during the period for the plantlet to enter the photoautotrophic state after the transplantation from a culture vessel; and the like problems.
In such circumstances, attention has recently come to be paid to a culturing process by photoautotrophic growth (hereinafter abbreviated to "photoautotrophic culture" in some cases) as a technique for solving the problems as mentioned above ( refer to "Acta Hortic." vol. 230, pp 121 to 127, 1988 ). The photoautotrophic culture uses a culture solution free from the addition of sugar or the like as a carbon source, utilizes the photosynthesis of the plantlet per se to be cultured, and makes use of carbon dioxide as a carbon source, thereby enabling to solve the problems with the above-mentioned photomixotrophic culture.
Since in the photoautotrophic culture, culture is performed under light irradiation while the carbon dioxide concentration in a culture vessel is maintained at a high level, importance is attached to the method for supplying carbon dioxide.
The method for supplying carbon dioxide is exemplified by a forced ventilation method in which carbon dioxide-rich air is forcibly supplied in a culture vessel and a natural ventilation method, of which the forced ventilation method is known to be more advantageous for plantlet growth {refer to "Hort Science" vol. 27, pp 1312 to 1314 (1992)}. However, an ordinary forced ventilation method involves the problem that there exists much difference in the degree of plantlet growth between the vicinity of inlet of the stream and that of the outlet thereof, thus making it difficult to assure a uniform nursery plant { refer to "Environ. Control in Biol."vol.37, pp 83 to 92 (1999)}.

Under such circumstances, an attempt is made to uniformize the distribution of carbon dioxide concentration by the arrangement of piping in a culture apparatus for the purpose of producing nursery plants with an uniform degree of growth { refer to "In Vitro Cell. Dev. Biol.-Plant" vol.35, pp 350 to 355 (1999)}. The above-mentioned method, although considerably effective in the case of a small-scale culture apparatus, gives rise to a difference in air pressure between the inlet of the piping and the outlet thereof. As a result, the problem is raised in that distribution of carbon dioxide concentration in the culture apparatus is rendered non-uniform, thus making it difficult to produce nursery plants with an uniform degree of growth.

On the one hand, a culture solution, when once placed in a culture apparatus, is usually difficult to freely put in and take out until plantlets are withdrawn, thereby also making it hard to compensate for the variation in nutrition content or maintain an appropriate nutrition quantity and solution level.

Such being the case, an attempt is made to install a culture solution tank outside a culture vessel, so that a culture solution is supplied therefrom to the culture vessel making it possible to vary and control the quantity and quality of the culture solution in the course of culture {refer to "In Vitro Cell. Dev. Biol.-Plant" vol.35, pp 350 to 355 (1999)}. However, even the foregoing method could not be said to be a complete controlling method, since it was impossible to control dissolved oxygen concentration in the culture solution and carry out forced draining.

GB-A-2 234 415 discloses a plant growth chamber with vertical tubes above the plants for supplying $CO_2$ and $O_2$.

SUMMARY OF THE INVENTION

In such circumstances, an object of the present invention is to provide a practical apparatus for culturing plantlets by means of photoautotrophic growth, in which the apparatus is capable of uniformizing the carbon dioxide concentration in an enclosed culture vessel, of freely taking a culture solution out of the culture vessel and putting the same thereinto, of controlling the quantity and quality of the culture solution and dissolved oxygen content, also of controlling the temperature and humidity in the culture vessel, and of steadily mass producing uniform nursery plants having an excellent degree of growth.

Another object of the present invention is to provide a practical process for culturing plantlets by means of photoautotrophic growth, in which the process is capable of efficient and steady mass production of uniform nursery plants having an excellent degree of growth through a simple operation by the use of the above-mentioned apparatus.

Other objects of the present invention will be obvious from the text of this specification hereinafter disclosed.

As a result of intensive and extensive research and investigation accumulated by the present inventors in order to achieve the foregoing objects, it has been found that the objects can be satisfied by an apparatus for culturing plantlets by means of photoautotrophic growth, comprising principal constituents consisting essentially of a light transmittable and enclosed culture vessel, a carbon dioxide-rich air supply chamber which is installed in contact with the bottom of the culture vessel and which functions as a buffer chamber, and a culture solution tank; a plurality of vertical fine tubes for allowing the carbon dioxide-rich air supply chamber and the culture vessel to communicate with each other; and an air pump mounted on the culture solution tank. It has also been found that uniform nursery plants having an excellent degree of growth can be efficiently and steadily mass produced through a simple operation by the use of the above-mentioned apparatus. The present invention has been accomplished by the foregoing findings and information.

That is to say, the present invention provides an apparatus for culturing plantlets by means of photoautotrophic growth, comprising principal constituents consisting essentially of a light transmittable and enclosed culture vessel having at least one vent at the upper portion thereof, a carbon dioxide-rich air supply chamber which is installed in contact with the bottom of the culture vessel, and a culture solution tank for supplying the clture vessel with a culture solution, wherein the supply chamber is connected to a supply source of carbon dioxide-rich air and is allowed to communicate with the cuture vessel through a plurality of vertical fine tubes each of which has an opening on each end and which are installed at the bottom of the culture vessel so that an upper end of each of the tubes protrudes beyond the liquid surface of the culture solution in the culture vessel, and the culture solution tank is connected to the culture vessel through a tube and is equipped with an air pump for supplying the culture vessel with the culture solution.

Moreover, there is also provided thereby a process for culturing plantlets by means of photoautotrophic growth by using the aforestated culturing apparatus, which comprises supplying an enclosed culture vessel, in which plantlets have been transplanted to supports with a culture solution in a culture solution tank by the use of an air pump, controlling the feed rate of the culture solution by utilizing the pressure of the air pump and difference in height between the culture vessel and the culture solution tank, and supplying the culture vessel with carbon dioxide-rich air from a carbon dioxide rich-air supply chamber.

BRIEF DESCRIPTION OF THE DRAWINGS

FIG.1 is a schematic illustration showing one example of apparatus for culturing plantlets through photoautotrophic growth according to present invention;

FIG.2 is a graph showing changes in the concentrations of carbon dioxide in a culture vessel with the lapse of time in Example 1 and Comparative Example 1; and

FIG.3 includes a steric illustration (a) showing the concentration of carbon dioxide at each position in the culture vessel on 28th day after the start of culturing in Example 1 and a steric illustration (b) showing the height of a eucalyptus nursery plant in Example 1.

The numerical symbols have the following designations:

1; enclosed culture vessel,
2; carbon dioxide-rich air supply chamber,
3; culture solution tank
4; air introduction pipe,
5; vertical fine tube
6; air pump
7; flexible tube;
8; pressurized air introduction pipe,
9; vent,
10; plantlet to be cultured,
11; support,
12; support pot
20; culturing apparatus according to the present invention

DESCRIPTION OF THE PREFERRED EMBODIMENTS

The apparatus for culturing a plant body by means of photoautotrophic growth comprises as principal constituents, a light transmittable and enclosed culture vessel, a carbon dioxide-rich air supply chamber and a culture solution tank.

The above-mentioned enclosed culture vessel needs to have a light transmission property, and accordingly it is constituted of a light transmittable material of construction, which is preferably exemplified by transparent plastics, for instance, an acrylic resin, polypropylene and polycarbonate from the aspect of light transmission property, weight saving, workability, resistance to an autoclave and the like factors.

The form and shape of the enclosed culture vessel to be used is not specifically limited, but is usually in the form of rectangular parallelopiped. Further, the volume thereof is not specifically limited, provided that it enables mass production of an objective plantlet and at the same time, to enhance production efficiency. The enclosed culture vessel needs only to be designed so as to sufficiently assure the vegetation density and the height of the plantlet to be vegetated.

The enclosed culture vessel is fitted on the upper portion with at least one vent. The position of the vent to be mounted is not specifically limited, however when the vessel is in the form of rectangular parallelopiped, the vents are preferably placed at the same positions of the upper portions of vertical central lines on the opposite two side faces. The vents may be installed on one pair only of opposite two side faces between the two pairs, making a total of two vents, or may be installed on both the two pairs thereof, making a total of four vents. The vent can be installed from the viewpoint of workability by mounting a pipe, preferably a plastic pipe made of the same material as that of the vessel so as to be directed outward. The diameter of the vent is not specifically limited, but may be determined from the feed rate of the carbon dioxide-rich air. The enclosed culture vessel is usually equipped with a temperature detector and a humidity detector.

Each of the vents is equipped at its outlet with a filter disc having a desirable pore size, for instance, not larger than $0.5 \mu m$ in diameter in order to prevent contamination caused by penetration of miscellaneous germs and bacteria into the vessel.

In addition, the carbon dioxide-rich air supply chamber (hereinafter sometimes abbreviated to "air supply

EP 1 127 482 B1

chamber") is installed in contact with the bottom of the aforestated enclosed culture vessel, is connected to a supply source of carbon dioxide-rich air, and is allowed to communicate with the culture vessel through a plurality of vertical fine tubes each of which has an opening on each end and which are installed at the bottom of the culture vessel so that an upper end of each of the tubes protrudes beyond the liquid surface of the culture solution.

Preferably, the above-mentioned air supply chamber is made of a material same as that of the culture vessel from the viewpoint of weight saving, workability, resistance to an autoclave and the like factors. The height of the air supply chamber is not specifically limited, but the chamber needs to reserve a volume which functions as a buffering space so that the flow rate of the carbon dioxide-rich air is almost equalized in each of the vertical fine tubes when the carbon dioxide-rich air supplied in the air supply chamber flows into the culture vessel through a plurality of vertical fine tubes.

In order to supply the air supply chamber with the carbon dioxide-rich air, the chamber is connected to a supply source of carbon dioxide-rich air. Such connection is usually carried out by connecting with a flexible tube, one or a plurality of pipes that are mounted outward on the bottom of the air supply chamber to one or a plurality of nozzles that are mounted on an air distributing blast pipe at the delivery of an air pump. The air pump is usually equipped at its outlet with a flowmeter for measuring the flow rate of the carbon dioxide-rich air and a filter disc having a pore size, for instance, not larger than $0.5\mu m$ in diameter in order to prevent contamination caused by penetration of miscellaneous germs and bacteria into the vessel.

The number, diameter and the material of the pipes that are to be installed on the bottom of the air supply chamber are not specifically limited, but the material thereof is preferably the same as that of the air supply chamber from the standpoint of workability and resistance to an autoclave.

The diameter of the vertical fine tubes is selected in the range of usually 0.1 to 10 mm, preferably 0.5 to 5 mm. It is necessary that an upper end of each of the tubes protrude beyond the liquid surface of the culture solution. Accordingly, the height of the tubes from the bottom of the culture vessel depends upon the liquid surface of the culture solution, and is selected in the range of usually 1 to 50 mm, preferably 2 to 25 mm. The number and the material of the vertical fine tubes are not specifically limited, but the number thereof is preferably determined so that the carbon dioxide concentrations in the vicinity of each of plant bodies are uniformized, and the material thereof is preferably the same as that of the culture vessel from the standpoint of workability and resistance to an autoclave.

By installing the air supply chamber with such constitution it is made possible for the chamber to fulfill the role of a buffer chamber against the carbon dioxide-rich air, and also to supply the inside of the culture vessel with carbon dioxide-rich air having a constant and uniform concentration through a large number of vertical fine tubes that are installed on the bottom of the vessel, thus uniformizing the distribution of the carbon dioxide-rich air in the culture vessel.

It is possible in the present invention to install when desired, a means for supplying the air supply chamber with a culture solution and/or sterilized water in order to control the humidity in the culture vessel. In this case, it is preferable to install the air introduction pipe so as to protrude into the bottom of air supply chamber, which pipe is fitted to the bottom of the air supply chamber for introducing carbon dioxide-rich air.

Further, it is made possible to install when desired, a temperature regulating mechanism such as a heater in the air supply chamber. Such a mechanism facilitates temperature and humidity controls in the culture vessel.

In order to supply the culture vessel with the culture solution in the culture solution tank, the lower part of the culture solution tank is connected to the lower part of the culture vessel with a tube, preferably a flexible tube. Further the culture solution tank is equipped with an air pump. By disposing the pipe which is connected to the delivery port of the air pump so that its end portion is placed in the upper portion or into the solution in the culture solution tank and operating the air pump, pressure is applied to the culture solution tank, with the results that the culture solution in the culture solution tank is supplied to the culture vessel through the flexible tube, and the liquid surface in the culture vessel is maintained at a prescribed level so as to immerse the root portion of the plantlet to be cultured into the culture solution. During the step, in the case where the end portion of the pipe connected to the air pump is placed into the solution in the culture solution tank, the dissolved oxygen concentration in the culture solution can be controlled by regulating the vertical position of the end portion thereof. The air pump is usually equipped at its outlet with a filter disc having a pore size, for instance, not larger than $0.5\mu m$ in diameter in order to prevent contamination caused by penetration of miscellaneous germs and bacteria into the culture solution.

It is preferable in the present invention to arrange the culture solution tank so that the liquid surface of the culture solution therein is positioned beneath the liquid surface of the culture solution in the culture vessel. By such arrangement and stopping the air pump operation, the culture solution in the culture vessel can be returned to the culture solution tank by gravity action. Preferably, the culture solution is taken out of and put into the culture vessel at the lowermost part thereof so as to enable all excess culture solution not yet absorbed in the support to be returned to the culture solution tank.

The size and the material of the culture solution tank are not specifically limited, but it is preferably made of plastics from the standpoint of weight saving, workability, resistance to an autoclave and the like factors. In addition, at least one portion of the culture solution tank may be transparent so as to visualize the liquid surface.

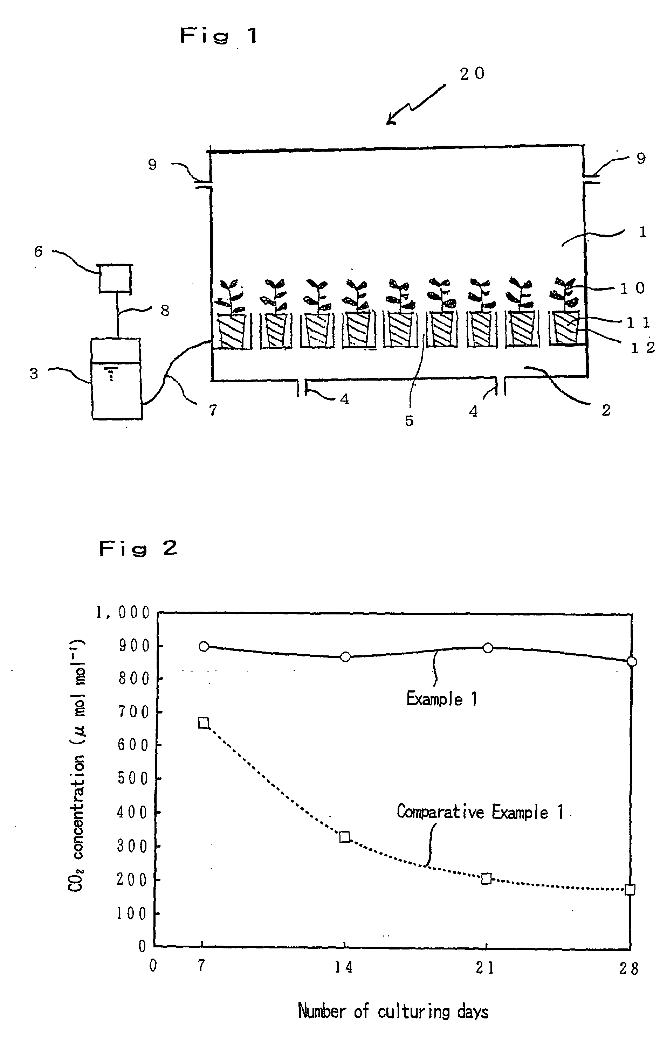

FIG.1 is a schematic illustration showing one example of apparatus for culturing plantlets through photoautotrophic growth according to the present invention.

The culturing apparatus 20 according to present invention is constituted essentially of a light transmittable and enclosed culture vessel 1 having at least one vent 9, a carbon dioxide-rich air supply chamber 2 which is installed in contact with the bottom of the culture vessel 1, and a culture solution tank 3 equipped with an air pump 6.

The carbon dioxide-rich air supply chamber 2 is connected to a supply source of carbon dioxide-rich air through an air introduction pipe (not shown on the drawing), and is allowed to communicate with the culture vessel 1 through a plurality of vertical fine tubes 5 each of which has an opening on each end and which are installed at the bottom of the culture vessel 1 so that an upper end of each of the tubes protrudes beyond the liquid surface of the culture solution in the culture vessel 1.

On the one hand, the culture solution tank 3 is connected to the culture vessel 1 through a flexible tube 7 to supply the culture vessel 1 with the culture solution therein, and the upper surface thereof is connected to an air pump 6 through an pressurized air introduction pipe 8. In addition, the pipe 8 may be so arranged that its end portion is positioned in the culture solution. The culture solution tank 3 is so arranged that the liquid surface therein is positioned beneath the liquid surface in the culture vessel 1.

Moreover, FIG.1 illustrates the inside state of the culture vessel 1 wherein plantlets 10 to be cultured which have been transplanted to supports (solid support material) 11 along with the supports 11 are each fitted and housed in a large number of support pots 12 each having at least one through-hole in its side and bottom so as to facilitate permeation of the culture solution. The large number of support pots 12 may be in such configuration that the support pots per se are connected, in which case through-holes may be made in the connecting portion of the support pots to allow vertical fine tubes to penetrate therethrough.

In what follows, detailed description will be given of the process for culturing plantlets by means of photoautotrophic growth according to the present invention.

In the photoautotrophic culture, which is adopted in the process of the present invention, a sugar-free culture solution is employed. The sugar-free culture solution is not specifically limited, but may be selected for use from culture solutions that have hitherto been customarily used in photoautotrophic culture. The culture solutions are exemplified by those containing for instance, inorganic nutrient components such as macro elements including nitrogen, phosphorus, potassium, magnesium and calcium, and micro elements including iron, manganese, copper and zinc. Further, the culture solutions may contain a vitamin such as nicotinic acid and thiamin hydro- chloride, an organic nutrient such as amino acids, and a growth regulator, but the above-exemplified components are not always indispensable. The culture solutions are specifically exemplified by that having MS culture medium composition of half concentration.

The MS culture medium composition contains in concentration of mg/liter, 1650 of $NH_4NO_3$, 1900 of $KNO_3$, 440 of $CaCl_2 \cdot 2H_2O$, 370 of $MgSO_4 \cdot 7H_2O$, 170 of $KH_2PO_4$, 27.8 of $FeSO_4 \cdot 7H_2O$, 37.3 of $Na_2$-EDTA, 22.3 of $MnSO_4 \cdot 4H_2O$, 8.6 of $ZnSO_4 \cdot 4H_2O$, 0.025 of $CaCl_2 \cdot 6H_2O$, 0.025 of $CuSO_4 \cdot 5H_2O$, 0.25 of $Na_2MoO_4 \cdot 2H_2O$, 0.83 of KI, 6.2 of $H_3BO_3$, 0.5 of nicotinic acid, 0.5 of pyridoxine hydrochloride, 0.1 of thiamin hydrochloride, 100 of myo-inositol and 2 of glycine.

Plantlets to which are applicable the culturing process according to the present invention may include any and all kinds of plantlets, provided that they can be cultured by an environmental controlling system of gas-liquid-solid terphase without specific limitation in the origin thereof. Examples of plantlets applicable to the culture include a plantlet and multiple auxiliary shoots that are formed by a method wherein plant tissues obtained by cell culture, apical meristem culture or the like are subjected to primary culture and successive subculture, and then applying early-stage branching method, protocorm-like body method, shoot primordium method or the like to the resultant plantlet, and preferably a node having leaves or a stem portion of a plantlet in which a plurality of nodes are cut into pieces by the unit of node. Specific examples of these plantlets include all herbs, flowers, trees, such as Cattleya, Phalaenopsis, Dendrobium, Cymbidium, Paphiopedilum, Vanda, Ascoscenda, Epidendrum, Miltonia, Oncidium, Odontglossum, Epiphlonitis, Calanthe, Nephrolepis, Dieffenbachia, Pecteilis, Cymbidium, Burceraceae, Syngonium, Streptocarpus, clematis, geranium, poinsettia, rhododendron, gloxinia, Alstroemeria, Hemerocallis, freesia, iris, carnation, Gypsophila elegans, statice, chrysanthemum, gerbera, primula, Saintpaulia, Cyclamen, lily, gladiolus, dahlia, rose, Bouvardia, azalea, gentian, narcissus, amaryllis, hyacinth, Begonia, aster savatieri, Miltonia, Asplenium, Benjamin, Spathiphyllum, Epipremnum aureum, Alocasia, Monstera, Philodendron, Syndabsis, Caladium, Ananas, Neoregelia, Dracaena, Cyathea, Adiantum, Asplenium nidus, Pteridophyte, Anthurium, Zoysia, strawberry, garlic, Japanese horseradish, cucumber, tomato, egg plant, potato, sweet potato, aroid, yam, Chinese yam, carrot, melon, konjak, bogrhubarb, asparagus, Brassica, Oryzae, barley, cotton plant, kenaf, banana , pineapple, oil palm, coffee, cocoa, apple, pear, Japanese persimmon, grape, peach, Japanese apricot, citrus, Japanese tea, raspberry, blue berry, almond, cherry, Litchi, mangostin, senkyu , Pinellia ternata, Jiou, Atractylodes japonica, Belladonna, aconite, Scopolia, ipecac, rhubarb, cherry blossom, kozo, white birch, Abelia, Eucalyptus, acacia, rubberwood, Paulonia, Populus, aspen, Sandalwood, Tectona, Latania, elm, birch, mulberry, oak species, hiba, cedar, cypress, Picea, fir, pine, yew, sequoia, lauan, Dipterocarpaceae, gmelina and mahogany.

In the present invention, the support (solid support material) which grows and develops the above-mentioned plantlet is not specifically limited, but can be properly optionally selected for use from conventional well known supports that have heretofore been used in culturing process by an environmental controlling system of gas-liquid-solid terphase. Examples of such supports include fibrous and/or porous materials such as sand, gravel, smoked coal, vermiculite, perlite, cellulose fiber, polyester fiber and ceramics fiber. Any of the above exemplified supports may be used alone or in combination with at least one other. Among them is particularly preferable the mixture of vermiculite and cellulose fiber (e.g. "Florialite" manufactured by Nisshinbo Industries Inc.) from the aspect of rooting property, growth promotion property and the like.

In the present invention, sunlight or artificial light sources can be used as a light source. Sunlight is advantageous in production cost, but is difficult to control because of marked variation, and accordingly an artificial light source is usually used. Examples of the artificial light source include fluorescent lamp, mercury vapor lamp, metal halide lamp, high pressure sodium vapor lamp and light emitting diode.

In the following, detailed description will be given of the process for culturing plantlets according to the present invention with reference to the foregoing FIG.1. First of all, plantlets 10 to be cultured are transplanted to supports 11 that are each fitted and housed in a large number of support pots 12 each having at least one through-hole in its side and bottom so as to facilitate permeation of the culture solution. Subsequently, the plantlets 10 together with the supports are housed in the enclosed culture vessel 1.

Next, the air pump 6 is operated to apply pressure to the culture solution tank 3 to supply the culture solution therein to the inside of the culture vessel 1. At the point of time when the liquid level of the culture solution reaches a prescribed level, the operation of the air pump 6 is stopped. Immediately thereafter or after the lapse of a proper time, the culture solution in the culture vessel 1 is returned to the culture solution tank 3 by gravity action through the flexible tube 7. The procedure can be repeated at an appropriate interval of time during the culturing.

In order to maintain the position of the culture solution at a prescribed height, a valve or stopper is fitted to the flexible tube 7, and is kept closed after the the culture solution has been supplied to the culture vessel 1.

In the present invention, the feed amount of the culture solution is regulated by making use of the air pump pressure and the difference in altitude between the culture vessel and the culture solution tank.

On the one hand, carbon dioxide-rich air is supplied to the carbon dioxide-rich air supply chamber 2 with an air pump (not shown on the drawing) through the air introduction pipe 4 which is installed on the bottom of the air supply chamber 2. The carbon dioxide-rich air thus supplied is passed through a large number of vertical fine tubes 5, supplied to the inside of the culture vessel 1, and discharged outside the system through the vent 9. The carbon dioxide concentration is controlled so as to be set in the range of usually 300 to 3000 $\mu$mol/mol, preferably 350 to 2000 $\mu$mol/mol. The carbon dioxide concentration, when being unreasonably low, results in failure to achieve efficient photosynthesis, whereas the concentration, when exceeding a definite limit, results in failure to enhance the photosynthesis rate in proportion thereto. When the size, number and quantity of plantlets to be cultured, and the culturing environment are constant, the consumption of carbon dioxide due to the growth of the plantlets varies in almost the same manner at all times. Accordingly, full grasp of the relationship among them enables the carbon dioxide concentration in the culture vessel to be maintained in a prescribed range without measuring it periodically or at any time.

During the culture, the plantets are irradiated with light from outside the system. To describe the condition of light, there is generally adopted photosynthetic photon flux (hereinafter sometimes abbreviated to "PPF"). The PPF, which varies depending upon the kinds, etc. of the plantlets to be cultured, is selected in the range of usually 50 to 500 $\mu$molm$^{-2}$ s$^{-1}$, preferably 100 to 300 $\mu$molm$^{-2}$s$^{-1}$. The PPF, when being unreasonably low, gives rise to a decrease in photosynthetic efficiency of the plantlets to be cultured, whereas the PPF, when being unreasonably high, sometimes brings about inhibited growth of the plantlets and besides, unfavorable cost. The irradiation with light is carried out usually not continuously but intermittently including bright period and dark period. For instance, there is adoptable a light irradiation condition including 12 to 16 hours of bright period and 12 to 8 hours of dark period.

The temperature in the culture vessel, which depends upon the kinds and the like of the plantlets to be cultured, is selected in the range of usually 5 to 40°C, preferably 20 to 35°C. The humidity in terms of relative humidity in the culture vessel varies depending upon the origin, kinds, degree of growth and the like of the plantlets to be cultured, for instance, a nursery plant of nursery culture system requires high humidity, whereas a plant grown to the extent of no longer needing acclimatization requires low humidity. In general, however, it is selected in the range of usually 40 to 98%, preferably 50 to 95%.

In regard to the number of ventilation (quotient obtained by dividing ventilation quantity in the culture vessel per unit time by the volume of the vessel) , there is adoptable a method in which the number thereof is low in the initial stage of culture, and is increased with the lapse of culturing time.

In the process according to the present invention, the control for the humidity of carbon dioxide-rich air and for the feed amount of the culture solution enables the control for the humidity in the culture vessel and besides, control for the temperature of the culture solution and/or carbon dioxide-rich air enables the control for the temperature in the culture vessel.

Further in the process according to the present invention, it is possible when desired, to supply the carbon dioxide-rich air supply chamber with the culture solution or sterilized water and also to regulate the temperature of the culture solution or sterilized water thus supplied. The above-mentioned controls further facilitate the controls for the humidity and temperature in the culture vessel. It is also made possible when desired, to control the dissolved oxygen concentration in the culture solution by pressurizingly letting air into the culture solution at a time of discharging the culture solution by pressurizingly letting air into the culture solution tank.

In summarizing the working effect of the present invention, it is made possible by the apparatus for culturing plantlets by means of photoautotrophic growth and the process for culturing plantlets by the use of this apparatus to uniformly distribute the carbon dioxide concentration in the enclosed culture vessel, to obtain easy control of the feed amount of the culture solution, and efficient and steady mass production of uniform nursery plants having an excellent degree of growth through a simple operation, thereby rendering the technology of the present invention highly valuable from the practical point of view.

In the following, the present invention will be described in more detail with reference to comparative examples and working examples, which however shall never limit the present invention thereto.

Example 1

The apparatus as illustrated in FIG.1 was used as the culturing apparatus. The enclosed culture vessel 1 was in the form of parallelopiped which had an internal volume of about 20 liter, was made of acrylic resin plates having a thickness of 2 mm, and measured 610 mm in length, 310 mm in width and 105 mm in height. The carbon dioxide-rich air ( hereinafter sometimes abbreviated to "air") supply chamber 2 was composed of acrylic resin plates same as in the culture vessel 1, and had a depth of 10 mm. There were installed four air introduction pipes 4 which were each made of an acrylic resin pipe having a length of 25 mm and an inside diameter of 1.5 mm, and were each connected to a nozzle mounted on an air distributing blast pipe fitted to the delivery port of an air pump for supplying air. To the delivery port of the air pump were attached a flowmeter and a filter disc having a diameter of 50 mm and a pore diameter of 0.5µm. A large number of vertical fine tubes 5 that allow the air supply chamber 2 and the culture vessel 1 to communicate with each other were each made of an acrylic resin pipe having a length of 3.5 mm and an inside diameter of 0.5 mm. The vents 9 each made of an acrylic resin pipe having a length of 10 mm and an inside diameter of 1.5 mm were mounted on the upper portions of vertical central lines on the longitudinally opposite two side faces of the vessel, and were equipped at each end with a filter disc having a diameter of 50 mm and a pore diameter of 0.5µm in order to prevent contamination caused by penetration of miscellaneous germs and bacteria into the vessel.

The culture solution tank 3 made of plastics had an internal volume of 2.5 liter, in which the liquid surface of the culture solution was arranged so as to be positioned 15 cm lower than the bottom of the culture vessel 1, and the lower portion of the tank was connected to the lowermost portion of the culture vessel 1 with the flexible tube 7. The delivery port of the air pump 6, which was operated with a timer, was connected to the upper surface of the culture solution tank 3 with the pressurized air introduction pipe 8 through a filter disc having a diameter of 50 mm and a pore diameter of 0.5µm.

There were used as plantlets to be cultured, nursery plants which had each two leaves with a node and had been formed by growing Eucalyptus seedlings through a conventional method for 30 days in test tubes, and as the culture solution, a culture solution having improved MS composition free from any sugars or vitamins.

As a first step, 448 numbers of the aforestated Eucalyptus nursery plants were each transplanted to a support which was composed of the mixture of vermiculite and cellulose fiber ( "Florialite" manufactured by Nisshinbo Industries Inc.) and which was fitted in a support pot having a plurality of through holes, and subsequently were housed in the culture vessel at a planting density of about $2.4 \times 10^3$ nursery plants/ $m^2$.

The culture solution was supplied for the first four days, in the culture vessel so as to immerse part of the support in the culture solution without draining. On and from the fifth day, the culture solution was once returned to the culture solution tank, and thereafter again supplied into the culture vessel by operating the air pump for 5 minutes, and then excess culture solution in the culture vessel was returned to the tank. The foregoing procedure was repeated at an interval of 24 hours.

The carbon dioxide-rich air was not supplied for the first two days, and then was supplied at a feed rate of 12 liters / hour(number of ventilation being 0.6 h⁻¹) until the seventh day. Thereafter the feed rate thereof was increased per every 3 to 4 days, so that the maximum feed rate was 210 liters /hour (number of ventilation being 10.4 h⁻¹) on 28th day. During supplying the carbon dioxide-rich air, the carbon dioxide concentration in the culture vessel was maintained in the range of 850 to 900 µmol/mol, and the carbon dioxide concentration in the air supplied to the culture vessel was maintained in the range of 1100 to 1200 µmol/mol.

Light irradiation was carried out by the use of a white fluorescent lamp during a bright period of 16 hours excluding a dark period of 8 hours, while maintaining the temperature inside the culture vessel at 26±2°C. During the light irradiation, the photosynthetic photon flux (PPF) was 120µmolm⁻²s⁻¹, and the relative humidity in the carbon dioxide-rich air supplied to the culture vessel was controlled to 60 to 70%.

After culturing for 28 days in the foregoing manner, the grown nursery plants were taken out of the culture vessel to measure the area and the number of leaves, the length of stem, and fresh weight and dry weight of leaves, stem and roots. The culture condition and the result of culture are given in Table 1, and Table 2, respectively.

Among the nursery plants thus cultured, 100 individuals were transplanted outside the culture vessel without acclimation and the survival rate after ten days from the transplantation was determined. As a result, it was 86%.

FIG.2 is a graph showing changes in the concentrations of carbon dioxide in a culture vessel with the lapse of time. The concentration thereof was obtained by sampling $250\mu\ell$ of the gas at the vent on 7th, 14th, 21st and 28th days, and measuring by gas chromatographic analysis ( the average value of three measurements).

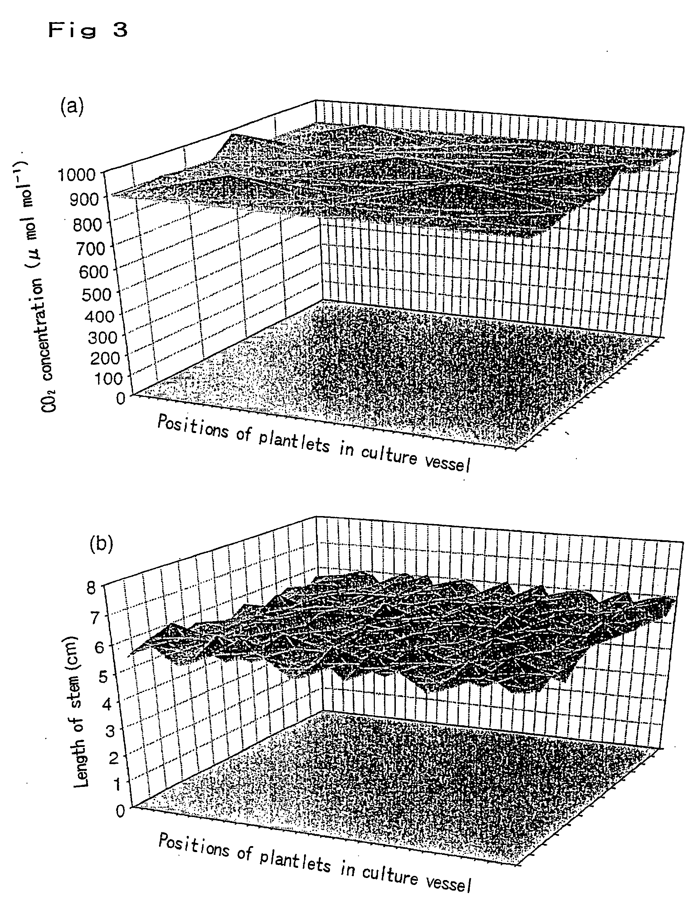

FIG.3 includes a steric illustration (a) showing the concentration of carbon dioxide at each position in the culture vessel on 28th day after the start of culturing, and a steric illustration(b) showing the height of eucalyptus nursery plants. The measurements were made of the carbon dioxide concentrations by sampling $250\mu\ell$ of each gas at 20 positions at a distance of 10 mm from the upper face of the culture vessel (lid), and measuring by gas chromatographic analysis ( the average value of three measurements).

Further an evaluation was made of the photosynthesis rate of the nursery plants on 28th day, and measurements were made of the relative humidity in the the culture vessel on 14th and 28th days by using a miniature humidity sensor; and ethylene concentration in the culture vessel on 14th and 28th days by sampling the gas therein and measuring by gas chromatographic analysis (the average value of five measurements). The results are given in Table 1. It is widely known that the existence of ethylene exerts an influence on the growth and differentiation of a plant and that a plant per se generates ethylene under a specific condition.

The photosynthesis rate of the above-mentioned nursery plants was calculated by the following formula:

$$Pn = \{ kEV ( C_{out} - C_{in} ) \} / N$$

where

| | |
|---|---|
| Pn: | photosynthesis rate ($mol \cdot h^{-1}$/number of nursery plants) |
| k: | conversion factor of $CO_2$ from volume to mol |
| E: | number of ventilation ($h^{-1}$) |
| V: | gas phase volume of culture vessel ($m^3$) |
| $C_{out}$ : | $CO_2$ concentration (mol/mol) in supply air in steady state during photosynthesis |
| $C_{in}$ : | $CO_2$ concentration (mol/mol) in culture vessel in steady state during photosynthesis |
| N: | number of nursery plants per one culture vessel |

Comparative Example 1

By making use, as the culturing apparatus, of ten units of Magenta-type culture vessels which had each an internal volume of 0.4 liter and which have heretofore been customarily used, 4 numbers of the Eucalyptus nursery plants same as those used in Example 1 were each transplanted to a support "Florialite" which was fitted in a support pot, and subsequently were housed in the culture vessel at a planting density of about $1.1 \times 10^3$ nursery plants/ $m^2$. The culture solution same as in Example 1, that is, a culture solution having improved MS composition free from any sugars or vitamins in an amount of 60 m$\ell$ was placed in each of the culture vessels, which were each covered with a standard cap, and then hermetically sealed with Parafilm. Each of the culture vessels was equipped on two holes having 2 mm diameter, with a filter disc having a pore diameter of 0.5 $\mu m$, and subjected to natural ventilation at the number of ventilation being 2.5h$^{-1}$ during the culture.

In the same manner as in Example 1, light irradiation was carried out, while maintaining the temperature inside the culture vessel at 26$\pm$2$°$C without effecting ventilation for the first two days, followed by natural ventilation. During the culture, the carbon dioxide concentration in the outside atmosphere was controlled in the range of 1100 to 1200 $\mu$mol/mol, and the relative humidity therein was controlled to 60 to 70% .

After culturing for a period of 28 days, the grown nursery plants were taken out of each of the culture vessels to evaluate them in the same manner as in Example 1. The results are given in Table 2.

Among the nursery plants thus cultured, 20 individuals were transplanted outside the culture vessel without acclimatization and the survival rate after ten days from the transplantation was determined. As a result, it was 46%.

FIG.2 is a graph showing changes in the concentrations of carbon dioxide in a culture vessel with the lapse of time. The concentration thereof was obtained by sampling the gas at the upper portion inside each of the vessels on 7th, 14th, 21st and 28th days, and measuring in the same manner as in Example 1.

Further in the same manner as in Example 1, an evaluation was made of the photosynthesis rate of the nursery plants on 28th day, and measurements were made of the relative humidity in the culture vessel on 14th and 28th days. The result are given in Table 1.

Table 1

| | Example 1 | Comparative Example 1 |
|---|---|---|
| CULTURE CONDITIONS..... | | |
| Volume of culture vessel (liter) | 20 | 0.4 |
| Number of nursery plants | 448 | 4 |
| Planting density(number of nursery plants/m$^2$) | 2.4x $10^3$ | 1.1 X $10^3$ |
| Type of ventilation | forced ventilation | natural ventilation |
| Number of ventilation times (h$^{-1}$) | 0.6~ 10.4 | 2.5 |
| $CO_2$ conc.in supply air($\mu$mol/mol) | 1100~ 1200 | 1100~ 1200 |
| PPF ($\mu$molm$^{-2}$ s$^{-1}$) | 120 | 120 |
| Relative humidity in supply air(%) | 60~ 70 | 60~ 70 |
| Culture solution | improved MS culture composition | improved MS culture composition |
| Support | Florialite | Florialite |
| RESULTS OF CULTURE····· | | |
| Relative humidity in 14th day | 86 | 95 |
| culture vessel(%) 28th day | 90 | 98 |
| Ethylene conc. in 14th day | - | 0.02± 0.0 |
| culture vessel ($\mu$mol/mol) 28th day | - | 0.09± 0.0 |
| Photosynthesis rate ($\mu$molh$^{-1}$/number of nursery plants) | 9.1 | 7.8 |
| Survival rate after transplantation of nursery plants outside culture vessel (%) | 86 | 46 |

## Table 2

| | | Example 1 | Comparative Example 1 |
|---|---|---|---|
| Area of leaves (cm²) | | 20.8 ± 3.4* | 15.3 ± 0.3 |
| Number of leaves | | 9.3 ± 0.7* | 8.4 ± 0.5 |
| Length of stem (cm) | | 5.9 ± 0.9* | 4.6 ± 0.7 |
| Fresh weight | leaves (mg) | 281 ± 38** | 195 ± 10 |
| | stem (mg) | 84.1 ± 13* | 62.3± 8.5 |
| | roots (mg) | 168 ± 17** | 127 ± 8.3 |
| Dry weight | leaves (mg) | 61.1 ± 9.6** | 23.9 ± 2.0 |
| | (wt.%) | 21.7 | 12.3 |
| | stem (mg) | 13.7 ± 2.1** | 7.9 ± 0.6 |
| | (wt.%) | 16.3 | 12.7 |
| | roots (mg) | 19.9 ± 2.7** | 13.5 ± 0.5 |
| | (wt.%) | 11.9 | 10.6 |

{Remarks} Weight % in dry weight is based on fresh weight

\* : significant by t test at P= 0.01

\* \* : significant by t test at P= 0.05

It is seen from the results in Table 1 that in Example 1, the relative humidity in the upper portion of the culture vessel which was 86% on 14th day increased to only 90% on 28th day, whereas in Comparative Example 1, the relative humidity therein was markedly high up to 95 to 98% throughout the culture period in spite of the relative humidity in the supply air being 60 to 70% in both Example 1 and Comparative Example 1.

As can be understood from FIG.2, Example 1 indicates the carbon dioxide concentration in the culture vessel being almost constantly in the range of about 870 to 900 μmol during the culture from 7th to 28th days, whereas Comparative Example 1 indicates marked decrease in carbon dioxide concentration from 320μmol on 14th day to 180μmol on 28th day, which decrease is attributable to the natural ventilation whereby gas exchange between the culture vessel inside and the outside of the system is restricted and also to the photosynthetic activity of the nursery plants.

Moreover, ethylene in the culture vessel was not detected during culture in Example 1, but was detected on 14th and 28th days in Comparative Example 1, signifying that it is impossible for natural ventilation to sufficiently remove ethylene which is generated from nursery plants.

As can be understood from FIG.2, Example 1 indicates excellent growth of leaves, stem and roots as compared with Comparative Example 1 in spite of its high planting density being about 2.2 times that in Comparative Example 1.

In addition, Example 1 points out a photosynthesis rate per one nursery plant on 28th day being 9.1μmolh[-1], whereas Comparative Example 1 points out a photosynthesis rate under the same condition being 7.8μmolh[-1]. The difference between the two is considered to be the capability of maintaining at a high level, the carbon dioxide concentration in the culture vessel by virtue of the forced ventilation in the case of Example 1.

Further in the case where the cultured nursery plants were transplanted outside of the culture vessel without acclimatization, Comparative Example 1 indicated the survival rate thereof being 46% only and besides, revealed such disadvantage that even in the surviving nursery plants, almost all of the leaves were wilted immediately after the transplantation, and some of them could no longer be restored; whereas Example 1 indicated the survival rate thereof being as high as 86% and besides, the leaves in the surviving nursery plants, even when being wilted, could be restored within a short period of time.

Furthermore, as can be clearly understood from FIG.2 and 3, Example 1 points out almost uniform concentration of carbon dioxide in the culture vessel with the results that there were obtained grown nursery plants having uniform length of stem and uniform degree of growth.

**Claims**

1. An apparatus for culturing plantlets by means of photoautotrophic growth, comprising principal constituents consisting essentially of a light transmittable and enclosed culture vessel (1) having at least one vent at the upper portion thereof, a carbon dioxide-rich air supply chamber (2) which is installed in contact with the bottom of the culture vessel, and a culture solution tank (3) for supplying the culture vessel with a culture solution, wherein the supply chamber is connected to a supply source of carbon dioxide-rich air and is allowed to communicate with the culture vessel through a plurality of vertical fine tubes (5) each of which has an opening on each end and which are installed at the bottom of the culture vessel so that an upper end of each of the tubes protrudes beyond the liquid surface of the culture solution in the culture vessel, and the culture solution tank (3) is connected to the culture vessel through tubing (7) and is equipped with an air pump (6) for supplying the culture vessel with the culture solution.

2. The apparatus for culturing plantlets by means of photoautotrophic growth according to Claim 1, wherein the culture solution tank is installed such that the liquid surface therein is positioned beneath the liquid surface in the enclosed culture vessel.

3. The apparatus for culturing plantlets by means of photoautotrophic growth according to Claim 1 or 2, which further comprises a means for supplying the carbon dioxide-rich air supply chamber with a culture solution and/or sterilized water.

4. A process for culturing plantlets by means of photoautotrophic growth by the use of the culturing apparatus as set forth in any of Claims 1 to 3, which comprises supplying an enclosed culture vessel (1) which houses a plurality of plantlets (10) that have been transplanted to supports (11) with a culture solution in a culture solution tank (3) by using an air pump (6), controlling the feed amount of the culture solution by utilizing the pressure of the air pump and difference in height between the culture vessel and the culture solution tank (3), and supplying the culture vessel (1) with carbon dioxide-rich air from a carbon dioxide-rich air supply chamber (2).

5. The process for culturing plantlets by means of photoautotrophic growth according to Claim 4, which further comprises supplying the carbon dioxide-rich air supply chamber with a culture solution and/or sterilized water, and thus controlling the humidity in the carbon dioxide-rich air.

**Patentansprüche**

1. Eine Einrichtung zur Zucht von Jungpflanzen durch photoautotrophes Wachstum, umfassend Hauptbestandteile, die im wesentlichen aus einem lichtdurchlässigen und eingeschlossenen Kulturgefäß (1) mit wenigstens einer Austrittsöffnung an dessen oberem Teil, einer kohlendioxidreiche Luft enthaltenden Versorgungskammer (2), welche in Kontakt mit dem Boden des Kulturgefäßes angebracht ist, und einem Kulturlösungstank (3) zur Versorgung des Kulturgefäßes mit einer Kulturlösung bestehen, wobei die Versorgungskammer mit einer Versorgungsquelle für kohlendioxidreiche Luft verbunden ist und mit dem Kulturgefäß über eine Vielzahl vertikaler feiner Röhren (5) kommunizieren kann, von denen jede an jedem Ende eine Öffnung besitzt und die am Boden des Kulturgefäßes so angebracht sind, daß ein oberes Ende einer jeden der Röhren über die flüssige Oberfläche der Kulturlösung im Kulturgefäß herausragt, und der Kulturlösungstank (3) mit dem Kulturgefäß über Schlauchmaterial (7) verbunden ist und mit einer Luftpumpe (6) zur Versorgung des Kulturgefäßes mit der Kulturlösung ausgestattet ist.

2. Die Einrichtung zur Zucht von Jungpflanzen durch photoautotrophes Wachstum gemäß Anspruch 1, wobei der Kulturlösungstank so angebracht ist, daß die Flüssigkeitsoberfläche darin unterhalb der Flüssigkeitsoberfläche im eingeschlossenen Kulturgefäß positioniert ist.

3. Die Einrichtung zur Zucht von Jungpflanzen durch photoautotrophes Wachstum gemäß Anspruch 1 oder 2, welche des weiteren ein Mittel zur Versorgung der Versorgungskammer für kohlendioxidreiche Luft mit einer Kulturlösung und/oder sterilisiertem Wasser umfaßt.

4. Ein Verfahren zur Zucht von Jungpflanzen durch photoautotrophes Wachstum unter Verwendung der Zuchteinrichtung, wie sie in einem der Ansprüche 1 bis 3 aufgeführt ist, welches die Versorgung eines eingeschlossenen Kulturgefäßes (1), welches eine Vielzahl von Jungpflanzen (10) beherbergt, die auf Träger (11) verpflanzt wurden, mit einer Kulturlösung in einem Kulturlösungstank (3) unter Verwendung einer Luftpumpe (6), Kontrolle der Zufuhrmenge der Kulturlösung durch Nutzen des Drucks der Luftpumpe und Höhendifferenz zwischen dem Kulturgefäß und dem Kulturlösungstank (3), und Versorgen des Kulturgefäßes (1) mit kohlendioxidreicher Luft aus einer kohlendioxidreiche Luft enthaltenden Versorgungskammer (2), umfaßt.

5. Das Verfahren zur Zucht von Jungpflanzen durch photoautotrophes Wachstum gemäß Anspruch 4, welches des weiteren das Versorgen der kohlendioxidreiche Luft enthaltenden Versorgungskammer mit einer Kulturlösung und/ oder sterilisiertem Wasser umfaßt und so die Feuchtigkeit der kohlendioxidreichen Luft kontrolliert.

**Revendications**

1. Appareil pour cultiver des jeunes plants par croissance photo-autotrophique, comprenant des organes principaux constitués essentiellement d'un récipient de culture (1) fermé et apte à transmettre la lumière, comportant au moins une aération au niveau de sa partie supérieure, une chambre d'alimentation en air riche en dioxyde de carbone (2) installée en contact avec la partie inférieure du récipient de culture, et un réservoir de solution de culture (3) destiné à délivrer une solution de culture au récipient de culture, la chambre d'alimentation étant reliée à une source d'alimentation en air riche en dioxyde de carbone et pouvant communiquer avec le récipient de culture par l'intermédiaire de plusieurs tubes fins verticaux (5) dont chacun possède une ouverture à chaque extrémité et qui sont installés au niveau de la partie inférieure du récipient de culture afin qu'une extrémité supérieure de chaque tube dépasse de la surface liquide de la solution de culture dans le récipient de culture, et le réservoir de solution de culture (3) étant relié au récipient de culture par l'intermédiaire d'un tuyau flexible (7) et étant équipé d'une pompe à air (6) pour délivrer la solution de culture au récipient de culture.

2. Appareil pour cultiver des jeunes plants par croissance photo-autotrophique, selon la revendication 1, dans lequel le réservoir de solution de culture est installé de telle façon que la surface de liquide y est située au-dessous de la surface de liquide dans le récipient de culture fermé.

3. Appareil pour cultiver des jeunes plants par croissance photo-autotrophique, selon la revendication 1 ou 2, comprenant également un moyen pour délivrer à la chambre d'alimentation en air riche en dioxyde de carbone une solution de culture et/ou de l'eau stérilisée.

4. Procédé pour cultiver des jeunes plants par croissance photo-autotrophique à l'aide de l'appareil de culture tel que défini dans l'une quelconque des revendications 1 à 3, comprenant la fourniture à un récipient de culture fermé (1) renfermant plusieurs jeunes plants (10) qui ont été transplantés sur des supports (11) d'une solution de culture contenue dans un réservoir de solution de culture (3) au moyen d'une pompe à air (2), le réglage de la quantité de solution de culture fournie à l'aide de la pression de la pompe à air et de la différence de hauteur entre le récipient de culture et le réservoir de solution de culture (3), et la fourniture au récipient de culture (1) d'air riche en dioxyde de carbone à partir d'une chambre d'alimentation en air riche en dioxyde de carbone (2).

5. Procédé pour cultiver des jeunes plants par croissance photo-autotrophique, selon la revendication 4, comprenant également la fourniture à la chambré d'alimentation en air riche en dioxyde de carbone d'une solution de culture et/ou d'eau stérilisée, et, par conséquent, le réglage de la teneur en humidité de l'air riche en dioxyde de carbone.

Fig. 1

Fig. 2

Fig 3

(a)

(b)